# EUROPEAN PATENT APPLICATION

(11) **EP 1 701 465 A2**
(43) Date of publication of application: **13.09.2006**
(21) Application number: 05254337.8
(22) Date of filing: 11.07.2005
(51) Int. Cl.: H04L 1/18

(54) **Method and apparatus for error recovery of the control channel in a wireless communication system**

(30) Priority: 10.03.2005 JP 2005066525
(71) Applicant: FUJITSU LIMITED, Kawasaki-shi, Kanagawa 211-8588 (JP)
(72) Inventor: Mizusawa, Hitoshi, c/oFujitsu Limited, Kawasaka-shi, Kanagawa 211-8588 (JP); Konta, Shinji c/o Fujitsu Mobile Comm. Techn. Ltd., Sapporo-shi, Hokkaido 060-0807 (JP); Ooba, T., c/oFujitsu Mobile Comm. Techn. Ltd., Sapporo-shi, Hokkaido 060-0807 (JP); Fujimoto, T. c/oFujitsu Mobile Comm. Techn. Ltd., Sapporo-shi, Hokkaido 060-0807 (JP); Mikami, Junya c/o Fujitsu Mobile Comm. Techn. Ltd., Sapporo-shi, Hokkaido 060-0807 (JP); Tokita, Koji c/o Fujitsu Mobile Comm. Techn. Ltd., Sapporo-shi, Hokkaido 060-0807 (JP); Kamada, T. c/o Fujitsu Mobile Comm. Techn. Ltd., Sapporo-shi, Hokkaido 060-0807 (JP); Kikuchi, Y. c/o Fujitsu Mobile Comm. Techn. Ltd., Sapporo-shi, Hokkaido 060-0807 (JP); Honta, Mitsuo c/oFujitsu Mobile Comm. Techn. Ltd., Sapporo-shi, Hokkaido 060-0807 (JP)
(74) Representative: Fenlon, Christine Lesley

(57) **Abstract**

A receiver receives information necessary for receive processing of a data channel via a corresponding control channel and executes the receive processing of the data channel based on the information received via the control channel. In the receiver, whether the control channel of a receive frame F1 has an error is monitored. And if there is an error, the data channel before demodulation of this receive frame is stored, and if the control channel of a retransmission frame F2, which is received subsequently, is normal, the stored data channel and the data channel of the retransmission frame are demodulated using the normal control channel information (parameters) of this retransmission frame, the demodulation results are synthesized, and decoding processing is performed based on the synthesized data.

## Description

The present invention relates to a receive method and a receiver, and more particularly to a receive method and a receiver for receiving a data channel and a control channel for sending information required for the receive processing of the data channel.

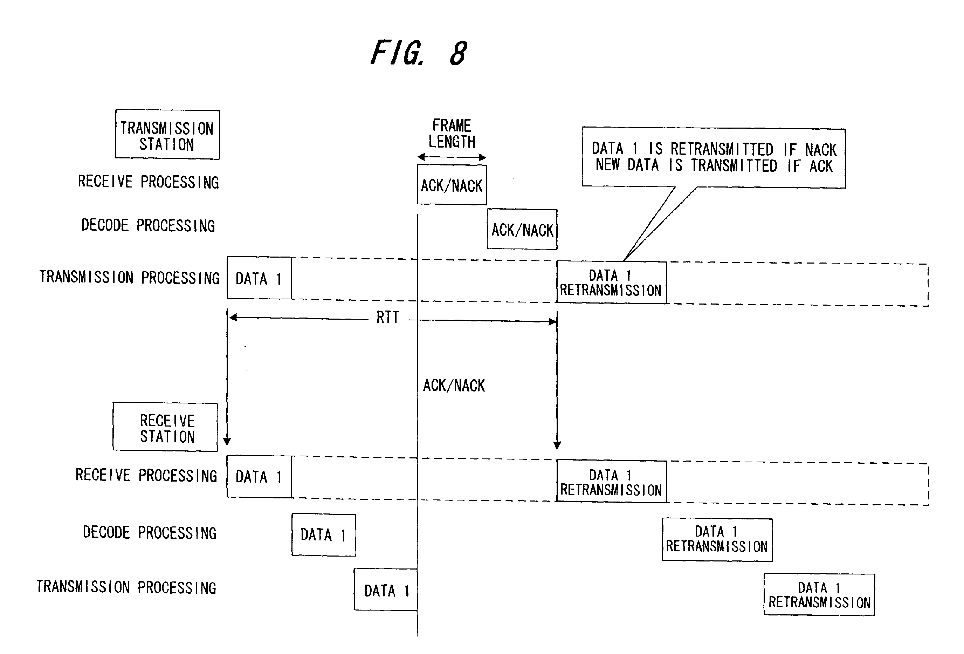

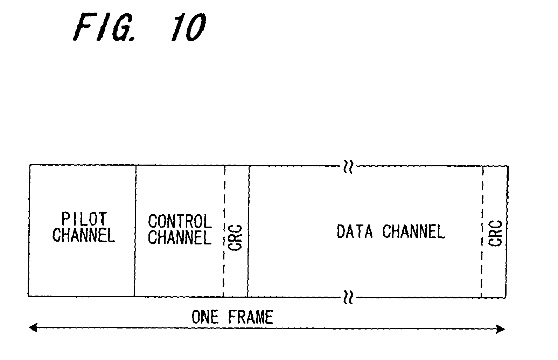

In mobile communication systems, a packet transmission method is suitable as a means of transmitting signals with various qualities and transmission rates efficiently. Particularly in a downstream line, transmitting large capacity data efficiently from the base station to each mobile terminal is demanded. Packet transmission has characteristics where a channel can be shared with a plurality of users, and the radio resource can be used efficiently. Other means for performing efficient transmission are adaptive modulation, scheduler and retransmission control.
- Adaptive modulation method
   In the adaptive modulation method, modulation parameters (e.g. data modulation method, encoding ratio, diffusion ratio) are changed according to the propagation path status. Data is generally modulated by various multivalued modulation methods (e.g. BPSK, QPSK, 16QAM) and errors are corrected. As the value of multivalued of the data modulation method become greater and as the encoding ratio R in error correction becomes closer to 1, the more data volume can be transmitted at one time, and therefore resistance to transmission errors becomes weaker. When the propagation path status is good, value of the multivalued modulation is increased and the encoding ratio is set closer to 1 so that the transmission data volume increases and the transmission throughput increases. When the propagation path status is poor, on the other hand, the value of the multivalued modulation is decreased and the encoding ratio is decreased so that the transmission data volume is decreased, and the rise of the transmission error rate can be prevented. In the case of a system using code division multiple access (CDMA), the diffusion ratio of the signal (also called process gain) can be used as a modulation parameter. In this way, by changing the modulation parameter according to the status of the propagation path, signal transmission matching the propagation path status can be performed, and as a result a rise of the transmission error rate is suppressed, and efficient transmission can be performed.
- Scheduler
   In mobile communication systems, efficiently allocating a radio source to each user is important when signals are transmitted to a plurality of users of a cell. In other words, in mobile communication systems, various factors such as users, time, channels, power and the data length of data to be transmitted are to be determined. The scheduler allocates the radio resource to each user based on various information. For example, based on the propagation path status of each user, the user, of which data is transmitted according to a predetermined algorithm, is determined.
- Automatic repeat request
   In an automatic repeat request (ARQ), the receive station judges whether the receive data is accurately decoded for each frame, and the receive success/failure (ACK/NACK) is notified to the transmission side. In the transmission station, the transmitted data information is stored in the buffer, and the data is retransmitted when a receive failure is notified. If a receive success is notified, the data is discarded from the buffer. When data communication is performed, some delay is allowed but accuracy is demanded. In the case of this kind of traffic, the maximum retransmission count in retransmission is set to high, so that communication with little data discard can be implemented.
   Also to improve the receive quality of the retransmission signals, the data is synthesized at the receive side (retransmission synthesis method). At the receive side, data containing errors, where receiving failed and retransmission was requested (NACK information), is stored in the buffer. When the retransmitted data is received, data in the buffer and retransmitted data are synthesized. By data synthesis, the receive quality is improved and as the retransmission count increases, the degree of improvement increases and the success ratio of the data receive increases.
- Round trip time RTT in automatic retransmission
   Fig. 8 is a diagram depicting the processing procedure of the stop-and-wait ARQ, which is one transmission method in basic ARQ. To simply explanation, processings in the transmission station and receive station are classified into three processings respectively: transmission processing, receive processing and decode processing. First the transmission station sends one frame of data (called data 1), which is a transmission data unit, to the receive station, and the receive station performs receive processing and decode processing. Then based on the error detection result, the receive station sends the receive result of the data 1, that is an ACK or NACK signal, to the transmission station via a control channel, and the transmission station performs the receive processing and decode processing of the control channel. In the transmission station, if the NACK signal is received (or if both the ACK signal and the NACK signal cannot be received), the data 1 is retransmitted to the receive station, and if the ACK signal is received, data 2, which is new data, is transmitted. Here the time required for retransmitting data 1 from the first transmission of the data 1 is the RTT (Round Trip Time), that is the retransmission space (e.g. a predetermined fixed time space). In the stop-and-wait ARQ, where new or retransmission data is transmitted with RTT spaces, the transmission efficiency is low.

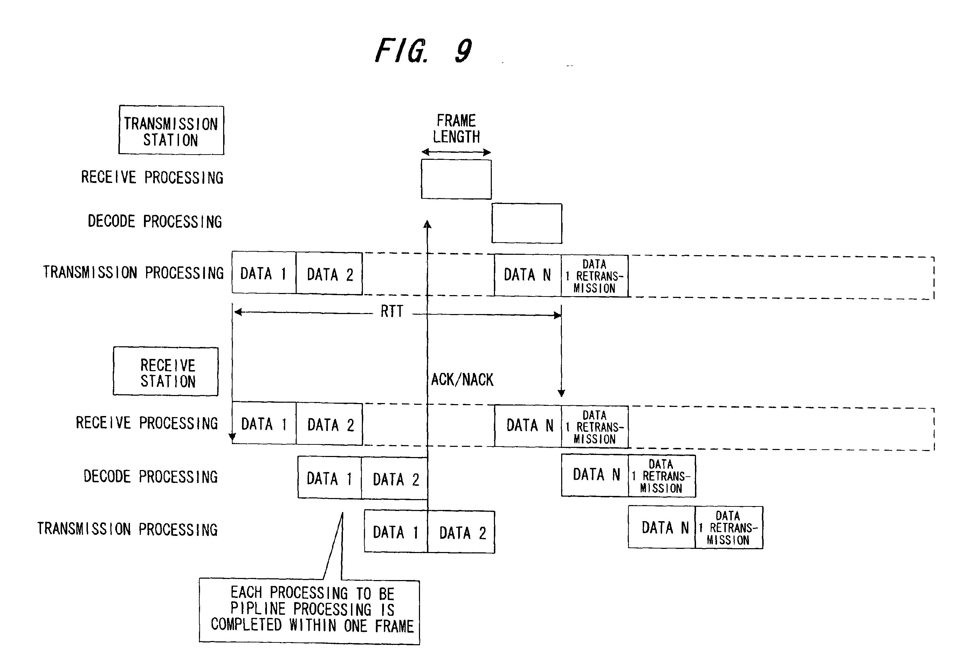

   Fig. 9 is a diagram depicting the processing procedure of the N-channel stop-and-wait ARQ, which is a modified version of the stop-and-wait ARQ. In the transmission station, the retransmission buffer is prepared for the number of frames, such as N number of frames corresponding to 1RTT, for example, so the data of the next frame can be transmitted without waiting for the report of the data receive result (ACK/NACK signal) of a frame, and the transmission efficiency is relatively high. In order to process the data which is continuously transmitted in this way in the receive station, the three processings: receive, decode and transmission, are pipeline processings, and each processing unit must be ended within one frame.
   As Fig. 10 shows, a frame is comprised of (1) a pilot channel to be used for channel estimation and receive power measurement at the receive side, (2) a control channel to be used for various control data communication, and (3) a data channel for data transmission, and a CRC bit is independently inserted in the control channel and data channel, so that errors can be detected for the control channel and data channel respectively. The control data to be transmitted via the control channel is, for example, a serial frame number SFN, parameters (e.g. demodulation method, encoding ratio, spreading ratio) and retransmission count. The serial frame number SFN is a number assigned to frames in ascending order, and the SFN of the n-th retransmission frame is a number when n x RTT is added to the SFN of the new frame.

The control channel portion and data channel portion included in one frame are called block data (block) respectively. Therefore each block is encoded for error detection respectively.

The control channel of a frame corresponds to the data channel of the same frame, and the main data of the data channel is receive-processed (demodulated), decoded and CRC-checked by the parameters of the control channel. For example, if the CRC result of the control channel of a frame is OK and the CRC result of the data channel after decoding is NG, then retransmission control is executed. In other words, the receive side requests the retransmission to the transmission side, and receives the retransmission data after RTT frames. And the data with errors received the last time and the retransmitted receive data after RTT frames are synthesized and decoded, and if the CRC result of the data channel becomes OK, the retransmission control completes, and if the CRC result is NG, retransmission is requested again.

If the CRC result of the control channel of a receive frame is NG, decoding is impossible since the parameters are unknown (or parameters are likely erroneous). Therefore the data channel is discarded regardless whether the receive frame is a new receive frame or a retransmission receive frame. In this way, the data channel is conventionally discarded if an error occurs to the control channel, so the problem is that the data retransmission count increases and the transmission efficiency drops, and even if data is retransmitted up to the maximum retransmission count, it is probable that the data cannot be received without error.

As prior art, ARQ, which aims at improving the transmission characteristics using ACK/NACK signals (see Japanese Patent Application Laid-Open No. 2002-9741) is available. In this ARQ in prior art, the receive side determines the reliability information of demodulated data, and detects errors, creates ACK/NACK signals indicated by three or more levels using the error detection result and data reliability information, and returns the signal to the transmission side. The transmission side judges whether the received signal is ACK or NACK, and transmits the new data or performs retransmission control based on the judgment result.

The prior art, however, is not for preventing a drop in the transmission efficiency due to an error of the control channel.

With the foregoing in view, it is desirable to prevent a drop in the transmission efficiency even if an error occurs to the control channel.

It is also desirable to use the data channel for retransmission synthesis without discarding the data channel, even if an error occurs to the control channel.

According to one embodiment of an aspect of the present invention, there is provided a receive method for receiving information necessary for the receive processing of the data channel via a corresponding control channel, and executing the receive processing of the data channel based on the information received via the control channel.

One embodiment of a first aspect of this receive method comprises a step of storing signals received by the data channel if the information received via the corresponding control channel has an error, and a step of acquiring first receive data by executing receive processing of the stored receive signals based on the information received via a retransmission control channel transmitted in a subsequent retransmission processing step.

One embodiment of a second aspect of this receive method comprises a step of storing receive signals at least either on a control channel through which the information is transmitted in a new transmission processing step, or on a control channel through which the information is transmitted in a retransmission processing step where no error is detected in the received information, and a step of acquiring first receive data by executing receive processing for the data channel which is transmitted in a subsequent retransmission processing based on the stored receive signals.

One embodiment of a third aspect of this receive method comprises a step of storing receive signals on a control channel where no error is detected in the received information, and a step of executing receive processing based on the stored receive signals, on a data channel which is transmitted either at the next transmission timing of the data channel corresponding to the control channel or at a retransmission timing. One embodiment of a fourth aspect of this receive method of the present invention comprises a step of holding a plurality of receive blocks received via the data channel, a step of acquiring retransmission count information (N) included in a normal control channel where no error is detected, a step of synthesizing the receive blocks of N or less being held and the receive block of the data channel corresponding to the normal control channel after performing receive processing thereon using the information received via the normal control channel, and a step of decoding the data after synthesis.

According to one embodiment of another aspect of the present invention, there is provided a receiver for receiving information necessary for receive processing of a data channel via a corresponding control channel, and executing the receive processing of the data channel based on the information received via the control channel.

One embodiment of a first aspect of this receiver comprises a holding unit for storing the signals received via the data channel when the information received via the corresponding control channel has an error, and a demodulation unit for acquiring first receive data by executing receive processing for the stored receive signals based on the information received via a retransmission control channel transmitted in a subsequent retransmission processing step.

One embodiment of a second aspect of this receiver comprises a holding unit for storing receive signals at least either on a control channel through which the information is transmitted in a new transmission processing step, or on a control channel through which the information is transmitted in a retransmission processing step where no error is detected in the received information, and a demodulation unit for acquiring first receive data by executing receive processing for the data channel which is transmitted in a subsequent retransmission processing step based on the stored receive signals.

One embodiment of a third aspect of this receiver of the present invention comprises a holding unit for storing receive signals on a control channel where no error is detected in the received information, and a demodulation unit for executing receive processing based on the stored receive signals, for a data channel which is transmitted either at the next transmission timing of the data channel corresponding to the control channel or at a retransmission timing.

One embodiment of a fourth aspect of this receiver of the present invention comprises a holding unit for holding a plurality of receive blocks received via the data channel, a synthesis unit for acquiring the retransmission count information (N) included in a normal control channel where no error is detected, and synthesizing the receive blocks of N or less being held and the receive block of the data channel corresponding to the normal control channel after performing receive processing thereon using the information received via the normal control channel, and a decoding unit for decoding data after synthesis.

According to embodiments of the present invention, even if an error is detected in a control channel of a frame, the data channel of this frame can be used for retransmission synthesis, therefore even if an error occurs to the control channel, the data retransmission count can be decreased and a drop in the transmission efficiency can be suppressed.

Also according to embodiments of the present invention, even if an error occurs to a control channel, the data channel can be used for retransmission synthesis without being discarded, therefore the transmission efficiency does not drop, the probability that data can be received normally increases, and data being discarded without being received normally decreases.

Other features and advantages of the present invention will be apparent from the following description taken in conjunction with the accompanying drawings, in which:
Fig. 1 is a diagram depicting an embodiment of the present invention;
Fig. 2 is a table describing an embodiment of the present invention;
Fig. 3 is a block diagram depicting the receiver having the retransmission control function of an embodiment of the present invention;
Fig. 4 shows a storage example of the parameter storage unit of an embodiment of the invention;
Fig. 5 shows a storage example of the retransmission synthesis buffer of an embodiment of the invention;
Fig. 6 is a general flow chart depicting the first processing of the receiver of an embodiment of the invention;
Fig. 7 is a general flow chart depicting the second processing of the receiver of an embodiment of the invention;
Fig. 8 is a diagram depicting the processing procedure of the stop-and-wait ARQ which is one retransmission system of basic ARQ;
Fig. 9 is a diagram depicting the processing procedure of N-channel stop-and-wait ARQ; and
Fig. 10 shows a frame format example.

The receiver receives data from the transmitter in frame units. A frame comprises a data channel and a control channel for transmitting the information necessary for decoding the data channel, and also has an error detection code for each channel. When an error is detected in the decoding result of the data of the data channel, the receiver requests retransmission to the transmission side, synthesizes the data of the received frame and the data of the retransmission frame, and executes decoding processing based on the synthesized data.

The control channel and the data channel may be transmitted by spreading data using different spreading codes as HS-SCCH and HS-PDSCH in HSDPA (High speed downlink Packet Access), and in this case data is received for each channel in sub-frame units.

This receiver further comprises a monitoring unit for monitoring whether the control channel of the receive frame has an error, a data channel storage unit for storing the data channel of the receive frame before demodulation if there is an error, a demodulation unit for demodulating the stored data channel and the data channel of the retransmission frame using the normal control channel information of this retransmission frame, a synthesis unit for synthesizing the demodulation results, and a decoding unit for performing decoding processing based on the synthesized data.

It is preferable to perform synthesis, but at least receive data, which could not be used conventionally, can be effectively used by demodulating the stored data channel using the normal control channel information of the retransmission frame.

If the control channel of the retransmission frame is not normal, the data channel before demodulation of this retransmission frame is stored, and if the control channel of the next retransmission frame to be received after the above retransmission frame is normal, the demodulation unit demodulates the stored data channel and the data channel of this next retransmission frame using the normal control channel information of this retransmission frame, and the synthesis unit synthesizes this demodulation result.

Also a plurality of receive blocks for a data channel are stored, and the retransmission count information N, included in the normal control channel where an error was not detected, is acquired, receive blocks of N or less are output from among the stored receive blocks, and demodulation (e.g. despread processing if the data was transmitted after spread processing) is performed according to this normal control channel.

The receiver further comprises a memory for storing normal control channel information when a control channel of a received frame is normal, and if the received frame is a retransmission frame and the control channel thereof has an error, the demodulation unit demodulates the data channel of the retransmission frame using the control channel information stored in the memory, the synthesis unit synthesizes this demodulation result and data of a frame which has been already received, and the decoding unit performs decoding processing based on the synthesized data.

### (A) Overview of embodiments of the present invention

### (a) First retransmission synthesis

According to embodiments of the present invention, even if a CRC error is detected in the control channel of a frame, the receive signal of the data channel of this frame is saved (e.g. the receive signal is stored in a status before despread processing is performed). And if a CRC error is not detected in the control channel of the retransmission frame hereafter, receive processing (such as demodulation processing including despreading processing) of the data channel of this retransmission frame and the stored data channel is performed using the parameters included in the control data of this normal control channel, and each of the acquired demodulation data is used for ARQ retransmission synthesis.

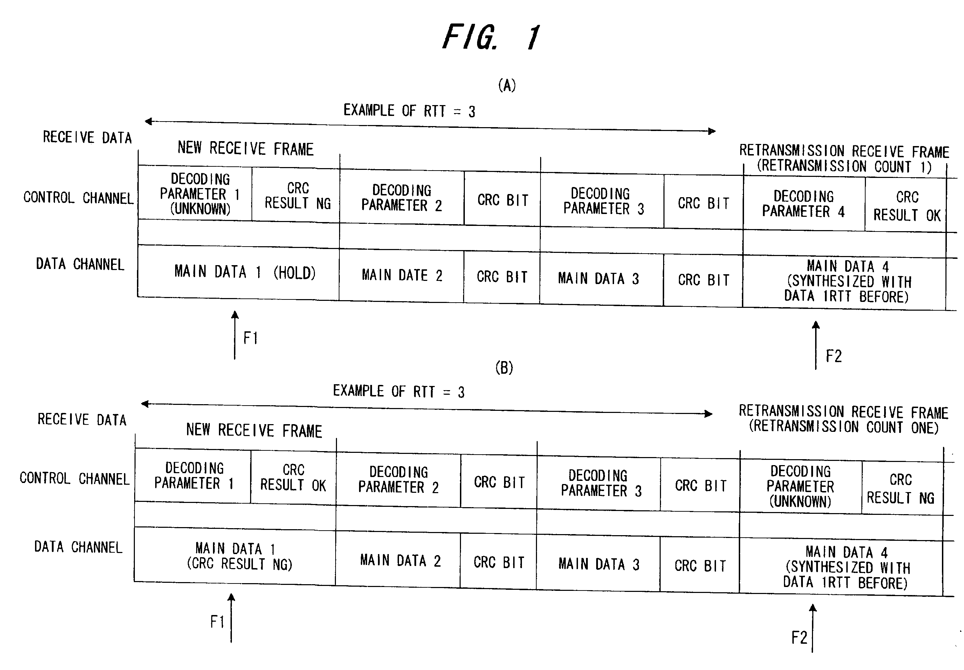

(A) of Fig. 1 is a diagram depicting such a case where RTT = 3. When a CRC error is detected in the control channel of the new receive frame F1 (CRC result is NG), the data channel (main data 1) of this frame is stored. And if the CRC error is not detected in the control channel of the retransmission frame F2 after RTT (CRC result is OK), both the data channels of the frames F1 and F2 are demodulated using the parameters of this control channel, and are used for the retransmission synthesis of ARQ.

The frame is transmitted via a shared channel, so the transmission destination of the frame can be judged, for example, by multiplying the data of the control channel by the pattern unique to the transmission destination and the receive device side determining correlation using the unique pattern.

Whether the frame is a new or a retransmission frame can be judged using the retransmission count information (N) included in the control channel, for example, but if it is difficult to identify whether F1 is a new frame or a retransmission frame because of a CRC error, the data of the data channel when the CRC error occurred is held in the sequence corresponding to the later mentioned FN (Frame Number). And the retransmission count information (N), included in the control channel (normal control channel) having the same FN which does not have a CRC error, is acquired. Then, stored data of a data channel before N frames having the same FN is judged as new data, and this new data is demodulated using the parameters included in this normal control channel, and is used as the target of ARQ retransmission synthesis.

### (b) Second retransmission synthesis

Even in the case when a CRC error was detected in the control channel of the current retransmission frame, if a CRC error is not detected in the control channel (normal control channel) of the previous retransmission frame or new frame, then receive processing (demodulation processing) of the data channel of the current retransmission frame is performed using the parameters included in the control data of this normal control channel, and the acquired demodulation data is used for retransmission synthesis.

(B) of Fig. 1 is a diagram depicting such a case where RTT = 3. If a CRC error is not detected in the control channel of the new frame F1, the parameters of this control channel are stored. When a CRC error is detected in the control channel of the current retransmission frame F2, the demodulation processing of the data channel of the current retransmission frame F2 is performed using these parameters, and the acquired demodulation data is used for the retransmission synthesis.

It can be judged that F2 is a transmission frame because F1 includes 0 as the retransmission count information, and the F2 has not exceeded the maximum retransmission count (MAX) yet.

Fig. 1 is an example of demodulating the data channel of the frame in which a CRC error was detected using the parameters of the control channel of the frame where a CRC error was not detected in the relationship between the new frame and the first retransmission frame.

### (c) Retransmission control when the maximum retransmission count (MAX) is 3

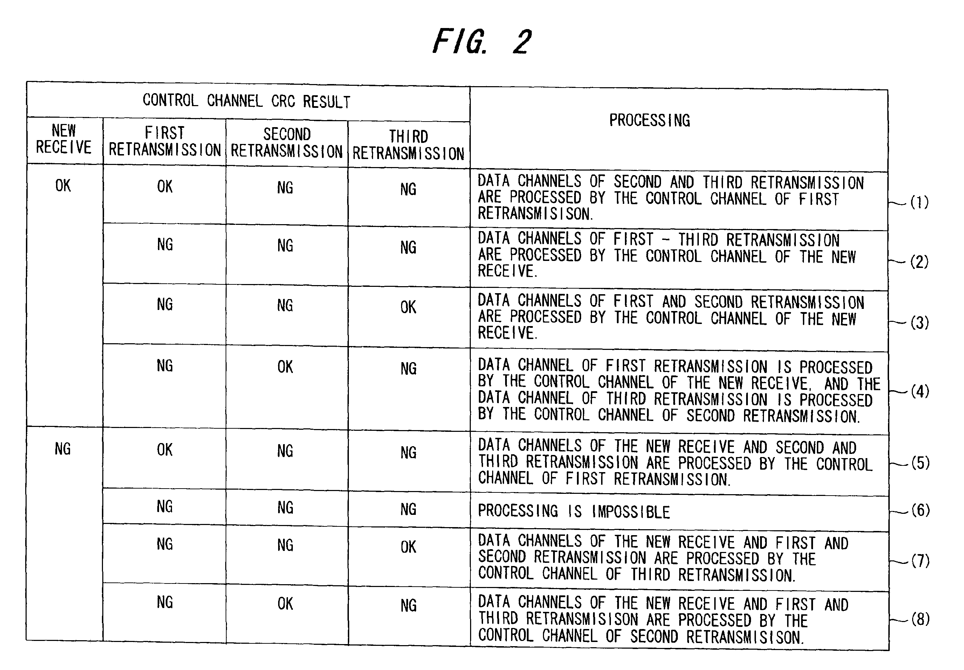

Fig. 2 is a table showing the parameters of a control channel of a frame to be used for demodulating the data channel of a frame where a CRC error was detected of the control channel when the maximum retransmission count is 3. The case when the CRC result of the control channel is an error is shown as NG, and no error is shown as OK.
(1) When the new receive frame and the first - third retransmission frames are OK, OK, NG and NG, the data channels of the second and third retransmission frames are decoded using the parameters of the control channel of the first retransmission.
(2) When the new receive frame and the first - third retransmission frames are OK, NG, NG and NG, the data channels of the first - third retransmission frames are decoded using the parameters of the control channel of the new frame.
(3) When the new receive frame and the first - third retransmission frames are OK, NG, NG and OK, the data channel of the second and third retransmission frames are decoded using the parameters of the control channel of the new frame.
(4) When the new receive frame and the first - third retransmission frames are OK, NG, OK and NG, the data channel of the first retransmission frame is decoded using the parameters of the control channel of the new frame, and the data channel of the third retransmission frame is decoded using the parameters of the control channel of the second retransmission frame.
(5) When the new receive frame and the first - third retransmission frames are NG, OK, NG and NG, the data channels of the new frame and the second - third retransmission frames are decoded using the parameters of the control channel of the first retransmission frame.
(6) When the new receive frame and the first - third retransmission frames are NG, NG, NG and NG, processing is impossible.
(7) When the new receive frame and the first - third retransmission frames are NG, NG, NG and OK, the data channels of the new frame and the first - second retransmission frames are decoded using the parameters of the control channel of the third retransmission frame.
(8) When the new receive frame and the first - third retransmission frames are NG, NG, OK and NG, the data channels of the new frame and the first and third retransmission frames are decoded using the parameters of the control channel of the second retransmission frame.

### (B) Configuration and operation of the receiver

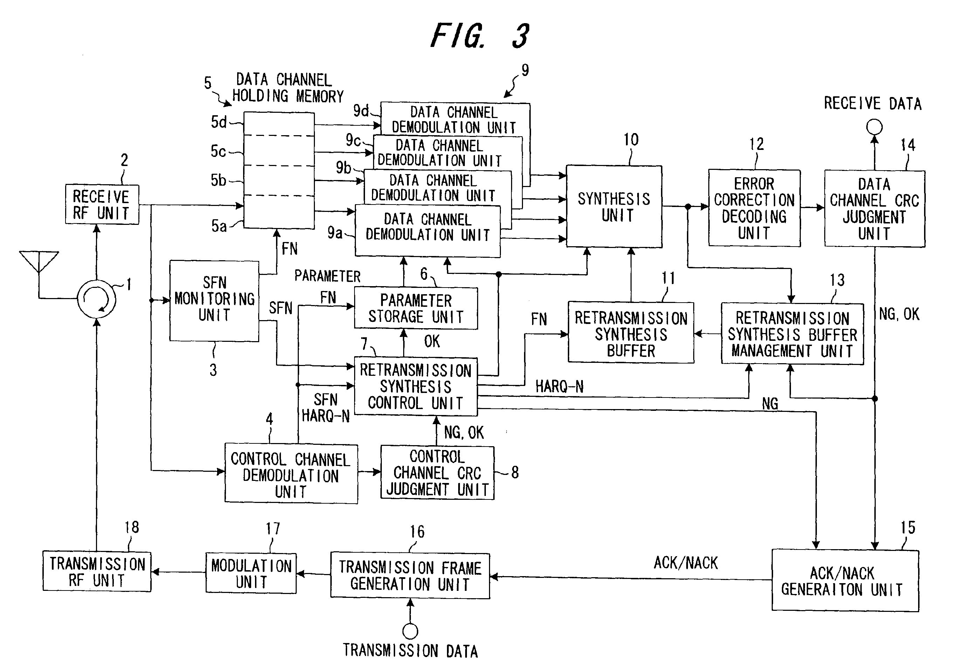

Fig. 3 is a block diagram depicting the receiver having the retransmission control function of embodiments of the present invention, where it is assumed that the data is transmitted/received according to the ARQ in Fig. 9, the maximum retransmission count is 3, and RTT = 3 frames (fixed). It is also assumed that the parameters are the same between the new frame and the retransmission frames thereof.

If a new frame is defined as the 0-th retransmission frame, and if there is a rule that the parameters are the same for the X-th retransmission frame and the Y-th retransmission frame (X and Y are positive integers which do not exceed MAX) and the X-th control channel does not have a CRC error and the Y-th control channel has a CRC error, then the Y-th data channel is demodulated using the parameters included in the control channel without a CRC error.

It is clearly preferable that decoding is executed after synthesizing the demodulation result with the demodulation result of the X-th data channel.

### (a) Receive operation of a new frame

When a radio signal is input through the antenna and the duplexer 1, the receive RF unit 2 converts the frequency of the radio signal into base band signals, and then AD-converts the base band signals and inputs them into the SFN monitoring unit 3, the control channel modulation unit 4 and the data channel holding memory 5. It is assumed that a new frame (not a retransmission frame) was input.

The SFN monitoring unit 3 counts up a serial frame number SFN every time a frame is received, and outputs the remainder when the serial frame number SFN is divided by RTT (= 3) as the frame number FN.

The initial value of SFN can be set using the SFN included in a control channel which does not have a CRC error, for example.

The control channel demodulation unit 4 demodulates and decodes the control channel, and the data channel holding memory 5 stores the data before demodulation of the new frame in the storage unit 5a along with the frame number FN.

The control channel demodulation unit 4 inputs the parameters (including modulation method, encoding ratio and spreading ratio and the frame number FN (= remainder of SFN/RTT) of the decoded control data to the parameter storage unit 6, and inputs the retransmission count HARQ-N and the sequence frame number SFN to the retransmission synthesis control unit 7.

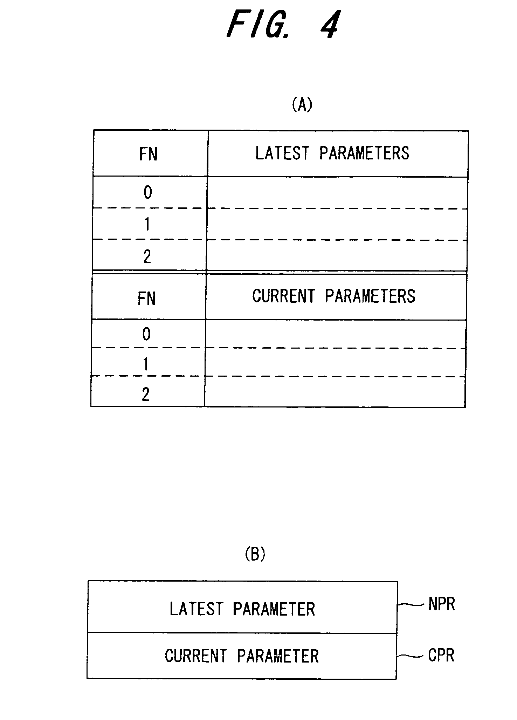

The parameter storage unit 6 updates the parameter using the parameters of the control channel everytime the CRC of the control channel becomes OK , thereby the parameter storage units 6 stores the latest parameters for each frame number FN, and also stores the parameters of the current frame (called current parameters) for each frame number FN. (A) of Fig. 4 is a storage example of the parameter storage unit 6, which stores the latest parameters and the current parameters corresponding to FN.

The control channel CRC judgment unit 8 performs CRC check on the decoding result of the control channel, and outputs the error detection signal (NG) and the no error signal (OK) depending on the presence of an error. The retransmission synthesis control unit 7 instructs the data channel demodulation unit 9 to demodulate the data if the control channel does not have an error and the SFN monitored by the SFN monitoring unit 3 matches the SFN sent via the control channel, and inputs the frame number FN (= remainder of SFN/RTT) to the retransmission synthesis buffer 11. And the retransmission synthesis control unit 7 notifies the parameter storage unit 6 that the control channel became OK, and has it store the current parameters as the latest parameters.

In the data channel demodulation unit 9, the data channel demodulation unit 9a corresponding to the storage unit 5a of the new frame executes demodulation processing for the data channel of the new frame using the current parameters stored in the parameter storage unit 6, and inputs the demodulation result to the synthesis unit 10.

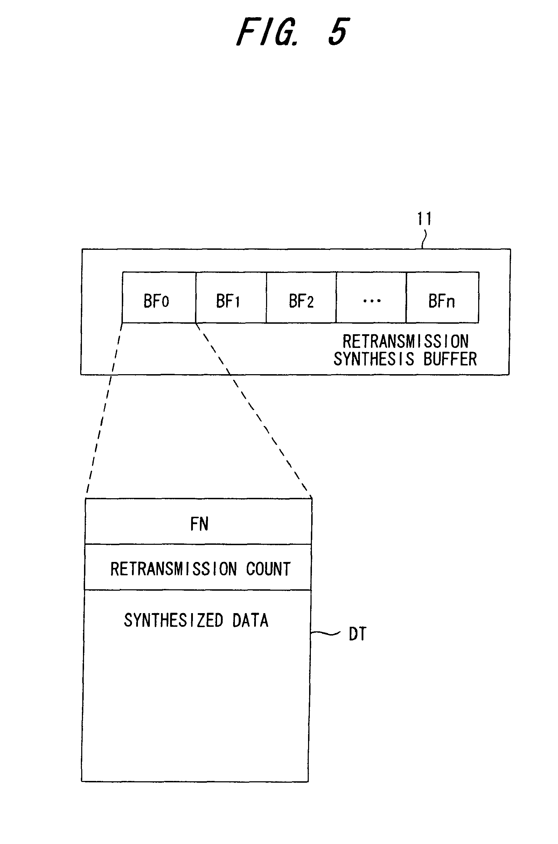

The retransmission synthesis buffer 11 stores a plurality (BFO - BFN) of synthesized data where an error was detected in the CRC error detection processing of the data channel along with the frame number FN and retransmission count, as shown in Fig. 5. Therefore when a frame number FN is input, the retransmission synthesis buffer 11 searches and outputs the synthesized data having this FN. In the embodiments of the present invention, it is assumed that the new frame is received, so the synthesized data from the retransmission synthesis buffer 11 is not input to the synthesis unit 10.

The synthesis unit 10 synthesizes the data which is input from the data channel demodulation unit 9a and the data (no data actually) which is input from the retransmission synthesis buffer 11, and inputs the synthesized data to the error correction decoding unit 12 and also to the retransmission synthesis buffer management unit 13. The error correction decoding unit 12 performs decoding processing on the synthesized data according to a predetermined encoding method, such as turbo encoding method, and inputs the decoding result to the data channel CRC judgment unit 14. The data channel CRC judgment unit 14 performs CRC error detection processing and inputs the error detection result (NG, OK) to the retransmission synthesis buffer management unit 13 and the ACK/NACK generation unit 15, and outputs the input data if there is no error.

When an error is detected, the retransmission synthesis buffer management unit 13 newly writes the synthesized data which was output from the synthesis unit 10 into the retransmission synthesis buffer 11 as a set with the corresponding frame number FN. If no error is detected or if the retransmission count is the maximum retransmission count (= 3), the retransmission synthesis buffer management unit 13 deletes the synthesized data with the current frame number FN which is stored in the retransmission synthesis buffer 11.

If NG (error detected) is input from the data channel CRC judgment unit 14, the ACK/NACK generation unit 15 generates NACK data, and if OK (no error) is input from the data channel CRC judgment unit 14, the ACK/NACK generation unit 15 generates ACK data.

The transmission frame generation unit 16 inserts this ACK/NACK data and other control data in the control channel of an upstream frame, and inserts the transmission data in the data channel thereof, and the modulation unit 17 modulates data after DA conversion according to a predetermined modulation method, and the transmission RF unit 18 converts the base band signals into RF signals, which increases the frequency, and transmits the RF signals through the duplex 1 and the antenna.

In addition to the above operation, if a CRC error is not detected in the control channel and a CRC error is detected in the data channel, the data of the new frame stored in the data Channel holding memory 5a is cleared. This is because demodulation has already been performed, and the result has already been stored in the retransmission synthesis buffer 11.

If an error is not detected in the control channel and an error is not detected in the data channel, the data of the new frame with the current frame number FN, which is stored in the data channel holding memory 5a, is cleared, and the parameters with the current frame number FN stored in the parameter storage unit 6 are cleared.

The above is the case when a CRC error is not detected in the control channel of the new frame, but if a CRC error is detected in the control channel of the new frame, the control channel CRC judgment unit 8 generates the CRC error detection signal NG. By this, the retransmission synthesis control unit 7 instructs the data channel demodulation unit 9 and the synthesis unit 10 to stop demodulation processing and synthesis processing, and instructs the data channel holding memory 5 to shift. By this shift instruction, the data channel holding memory 5 shifts the data channel of the new frame from the holding unit 5a to 5b.

As described above, if it is not clear whether the frame is a new or retransmission frame because of the CRC error, the data channel is first shifted to the holding unit 5b assuming that the frame is new data. And if, the retransmission count information N included in the control channel with the same FN that is received next, is 1, it is recognized that the data shifted to 5b is new data with certainty. If the retransmission count information N include in the control channel with the same FN that is received next, is 0, the data shifted to 5b is able to discard so that the data is probably sent for other receivers. The retransmission synthesis control unit 7 inputs NG to the ACK/NACK generation unit 15. By this, the ACK/NACK generation unit 15 generates NACK data, and the transmission frame generation unit 16 inserts the NACK data and other control data in the control channel of an upstream frame, inserts the transmission data in the data channel, and executes transmission via the modulation unit 17 and the transmission RF unit 18.

If the control channel is NG, the so called DTX status may be set. In this case the transmitter controls retransmission by DTX detection.

### (b) First retransmission frame receive operation

### (b-1) Case where the CRC detection result of control channel of new frame was OK:

When the CRC detection result of the control channel of the new frame was OK (in the case of (1) - (4) of Fig. 2), the data after demodulation of the new frame was stored in the retransmission synthesis buffer 11, and the data before demodulation of the new frame was not stored in the data channel holding memory 5.

The first retransmission frame is input to the control channel demodulation unit 4 and the data channel holding memory 5. Whether the frame is a retransmission frame or not can be detected on the basis that the frame generates after 1RTT from the NACK occurrence, for example.

The control channel demodulation unit 4 demodulates and decodes the control channel of the retransmission frame, and the data channel holding memory 5 stores the data channel of the retransmission frame in the storage unit 5a along with the frame number FN.

The control channel demodulation unit 4 inputs the parameters and the frame number FN out of the demodulated and decoded control data to the parameter storage unit 6, and inputs the retransmission count HARQ-N and sequence frame number SFN to the retransmission synthesis control unit 7. The control channel CRC judgment unit 8 performs CRC check on the decoding result of the control channel of the retransmission frame, and outputs the error detection signal (NG) or the no error signal (OK) depending on the presence of an error.

If the control channel has no error, and if SFN which is output by the SFN monitoring unit 3 and the SFN which was sent via the control channel match (in the case of (1) of Fig. 2), the retransmission synthesis control unit 7 instructs the data channel demodulation unit 9 to demodulate the data by the current parameters, and instructs the synthesis unit 10 to perform retransmission synthesis, and inputs the current frame number FN to the retransmission synthesis buffer 11. Also the retransmission synthesis control unit 7 notifies the parameter storage unit 6 that no error was detected in the control channel (OK), and has it store the current parameters as the latest parameters.

In the data channel demodulation unit 9, the data channel demodulation unit 9a, corresponding to the storage unit 5a of the retransmission frame, executes the demodulation processing on the data channel of the retransmission frame using the current parameters of the current frame number FN stored in the parameter storage unit 6, and inputs the demodulation result to the synthesis unit 10. The retransmission synthesis buffer 11 searches the data having the current frame number FN which was input from the retransmission synthesis control unit 7, and inputs it to the synthesis unit 10 if it exists. Since it is assumed that the new frame data including an error is held in the buffer 11, the new frame data including an error is detected from the buffer, and is input to the synthesis unit 10.

The synthesis unit 10 synthesizes the data which is input from the data channel demodulation unit 9a and the data which is input from the retransmission synthesis buffer 11, and inputs the synthesized data to the error correction decoding unit 12, and also to the retransmission synthesis buffer management unit 13.

The error correction decoding unit 12 performs decoding processing on the synthesized data according to the encoding method, and inputs the decoding result to the data channel CRC judgment unit 14. The data channel CRC judgment unit 14 performs the CRC error detection processing, and inputs the error detection result (NG, OK) to the retransmission synthesis buffer management unit 13 and the ACK/NACK control unit 15, and outputs the input data if there is no error.

If an error is detected, the retransmission synthesis buffer management unit 13 updates the old data in the retransmission synthesis buffer 11 to the synthesized data, which is output from the synthesis unit 10 and the corresponding current frame number FN as a set. If no error is detected or if the retransmission count is the maximum retransmission count, the retransmission synthesis buffer management unit 13 deletes the old data having the current frame number FN stored in the retransmission synthesis buffer 11.

Hereafter processing the same as the new frame receiving processing in (a) will be performed.

If a CRC error is not detected in the control channel of the retransmission frame and a CRC error is detected in the data channel, the current parameters are stored in the parameter storage unit 6 as the latest parameters, and the data with the current frame number FN stored in the data channel holding memory 5a is cleared. This is because demodulation of the data has been completed and data has already been synthesized and stored in the retransmission synthesis buffer 11.

If no CRC error is detected in the synthesis data, the data with the current frame number FN stored in the data channel holding memory 5 is cleared, and the parameters with the current frame number FN stored in the parameter storage unit 6 are cleared.

The above is the case when a CRC error was not detected in the control channel of the retransmission frame, but if a CRC error is detected in the control channel of the retransmission frame (in the case of (2) - (4) of Fig. 2), the control channel CRC judgment unit 8 generates the CRC error detection signal NG. By this, the retransmission synthesis control unit 7 checks whether the latest parameters with the current frame number FN are stored in the parameter storage unit 6. Since the latest parameters with the current frame number FN are stored, the retransmission synthesis control unit 7 instructs the data channel demodulation unit 9 to demodulate the data, and also instructs the synthesis unit 10 to perform the retransmission synthesis, and inputs the current frame number FN to the retransmission synthesis buffer 11. The retransmission synthesis control unit 7 also notifies the parameter stage unit 6 that the CRC of the control channel became NG, and instructs to discard the current parameters and to keep the latest parameters.

In the data channel demodulation unit 9, the data channel demodulation unit 9a corresponding to the storage unit 5a of the retransmission frame demodulates the data channel of the retransmission frame using the latest parameters with the current frame number FN stored in the parameter storage unit 6 by a demodulation instruction, and inputs the demodulation result to the synthesis unit 10. The retransmission synthesis buffer 11 searches the data having the current frame number FN which was input from the retransmission synthesis control unit 7, and inputs it to the synthesis unit 10 if it exists. Since it is assumed that the new frame data including an error has been held in the buffer 11, the new frame data including an error is detected from this buffer, and is input to the synthesis unit 10.

The synthesis unit 10 synthesizes the data which is input from the data channel demodulation unit 9a and the data which is input from the retransmission synthesis buffer 11, and inputs the synthesized data to the error correction decoding unit 12, and also inputs it to the retransmission synthesis buffer management unit 13.

The error correction decoding unit 12 performs decoding processing on the synthesized data according to the encoding method, and inputs the decoding result to the data channel CRC judgment unit 14. The data channel CRC judgment unit 14 performs CRC error detection processing, and inputs the error detection result (NG, OK) to the retransmission synthesis buffer management unit 13 and the ACK/NACK control unit 15, and outputs the synthesized data which was input if there is no error.

If an error is detected, the retransmission synthesis buffer management unit 13 updates the old data in the retransmission synthesis buffer 11 to the synthesized data which is output from the synthesis unit 10 and the corresponding current frame number FN as a set. If no error is detected or if the retransmission count is the maximum retransmission count, the old data having the current frame number stored in the retransmission synthesis buffer 11 is deleted. Hereafter processing the same as the new frame receiving processing in (a) will be performed.

If a CRC error is detected in the synthesized data (in the case of (2) - (4) of Fig. 2), the data channel of the retransmission frame with the current frame number FN stored in the data channel holding memory 5 is cleared, but the latest parameters with the current frame number FN stored in the parameter storage unit 6 are not cleared. If a CRC error is not detected in the synthesized data (in the case of (1) of Fig. 2), the data channel of the retransmission frame with the current frame number FN stored in the data channel holding memory 5 and the latest parameters with the current frame number FN stored in the parameter storage unit 6 are cleared.

### (b-2) Case where CRC detection result of control channel of new frame is NG:

When the CRC detection result of the control channel of the new frame is NG (in the case of (5) - (8) of Fig. 2), the data before the demodulation of the new frame is stored in the holding unit 5b of the data channel holding memory 5, and the data after the demodulation of the new frame is not stored in the retransmission synthesis buffer 11.

The first retransmission frame is input to the control channel demodulation unit 4 and the data channel holding memory 5. The control channel demodulation unit 4 demodulates and decodes the control channel of the retransmission frame, and the data channel holding memory 5 stores the data channel of the retransmission frame in the storage unit 5a along with the current frame number FN.

The control channel demodulation unit 4 inputs the parameters and the frame number FN out of the decoded control data to the parameter storage unit 6, and inputs the retransmission count HARQ-N and the serial frame number SFN to the retransmission synthesis control unit 7. The control channel CRC judgment unit 8 performs CRC check on the decoding result of the control channel of the retransmission frame, and outputs the error detection signal (NG) or the no error signal (OK) depending on the presence of an error.

If the control channel has no error, and SFN, which is monitored by the SFN monitoring unit 3, and the SFN which was sent via the control channel match each other(in the case of (5) of Fig. 2), the retransmission synthesis control unit 7 instructs the data channel demodulation unit 9 to demodulate the data, and instructs the synthesis unit 10 to perform the retransmission synthesis, and inputs the current frame number FN to the retransmission synthesis buffer 11. Also the retransmission synthesis control unit 7 notifies the parameter storage unit 6 that the CRC of the control channel became OK, and has it store the current parameters with the current frame number FN as the latest parameters.

In the data channel demodulation unit 9, the data channel demodulation units 9a and 9b, corresponding to the retransmission frame storage unit 5a and the new frame storage unit 5b, execute demodulation processing using the current parameters with the current frame number FN stored in the parameter storage unit 6, and inputs the demodulation result to the synthesis unit 10.

At this time, the retransmission count specified by as the information of the control channel in the retransmission frame is 1, so the data stored in the data channel demodulation unit 5b is handled as data of the new frame in executing the demodulation. If the data of the same as the current frame number FN is stored in the 5c, 5d..., in spite of that the retransmission count is 1, the data is able to discard so that it probably should not synthesis data. The retransmission synthesis buffer 11 searches the data with the frame number FN which was input from the retransmission synthesis control unit 7, and inputs it to the synthesis unit 10 if it exists. Since the new frame data is not held in the buffer 11, in this case the synthesized data is not input from the buffer to the synthesis unit 10.

The synthesis unit 10 synthesizes the data which is input from the data channel demodulation units 9a and 9b and the data (no data actually) which is input from the retransmission synthesis buffer 11, and inputs the synthesized data to the error correction decoding unit 12 and also to the retransmission synthesis buffer management unit 13.

The error correction decoding unit 12 performs decoding processing on the synthesized data according to the encoding method, and inputs the decoding result to the data channel CRC judgment unit 14. The data channel CRC judgment unit 14 performs the CRC error detection processing, and inputs the error detection result (NG, OK) to the retransmission synthesis buffer management unit 13 and the ACK/NACK control unit 15, and outputs the input data if there is no error.

If an error is detected, the retransmission synthesis buffer management unit 13 updates the old data having the current frame number FN of the retransmission synthesis buffer 11 to the synthesized data which is output from the synthesis unit 10 and the corresponding current frame number FN as a set. If no error is detected or if the retransmission count is the maximum retransmission count, the old data, having the current frame number FN stored in the retransmission synthesis buffer 11, is deleted by the retransmission synthesis buffer management unit 13. Hereafter processing the same as the new frame receiving processing in (a) will be performed.

If a CRC error is not detected in the control channel of the retransmission frame and a CRC error is detected in the data channel, the data channels of the new frame and the retransmission frames having the current frame number FN stored in the data channel holding memory 5 are all cleared. Also the current parameters of the current frame number FN are stored in the parameter storage unit 6 as the latest parameters. On the other hand, if a CRC error is not detected in the synthesized data, the data channels of the new frame and the retransmission frames, having the current frame number FN stored in the data channel holding memory 5, and the parameters with the current frame number FN stored in the parameter storage unit 6 are all cleared.

The above is the case when a CRC error was not detected in the control channel of the retransmission frame, but if a CRC error is detected in the control channel of the retransmission frame (in the case of (6) - (8) of Fig. 2), the control channel CRC judgment unit 8 generates the CRC error detection signal NG. By this, the retransmission synthesis control unit 7 checks whether the latest parameters with the current frame number FN are stored in the parameter storage unit 6. Since the latest parameters with the current frame number FN have not yet been stored in the parameter storage unit 6 in the case of (6)-(8) of Fig.2, the retransmission synthesis control unit 7 instructs the data channel demodulation unit 9 and the synthesis unit 10 to stop the demodulation processing and the synthesis processing, and instructs the data channel holding memory 5 to shift. By a shift instruction, the data channel holding memory 5 shifts the data channel of the new frame with the current frame number FN from the holding unit 5b to 5c, and shifts the data channel of the first retransmission frame with the current frame number FN from the holding unit 5a to 5b. The retransmission synthesis control unit 7 also inputs NG in the ACK/NACK generation unit 15. By this, the ACK/NACK generation unit 15 generates the NACK data, the transmission frame generation unit 16 inserts the NACK data and the other control data in the control channel of an upstream frame, also inserts the transmission data in the data channel, and sends it via the modulation unit 17 and the transmission RF unit 18.

In the case of a control channel NG, retransmission from the transmitter can be waited by setting DTX status without sending the NACK signal.

The operation of the receiver when the transmission count is 1 or less in Fig. 2 was described, but the receiver operates in the same way as the case of a retransmission count of 1 even when the retransmission count is 2 - 3.

### (c) General processing flow of receiver

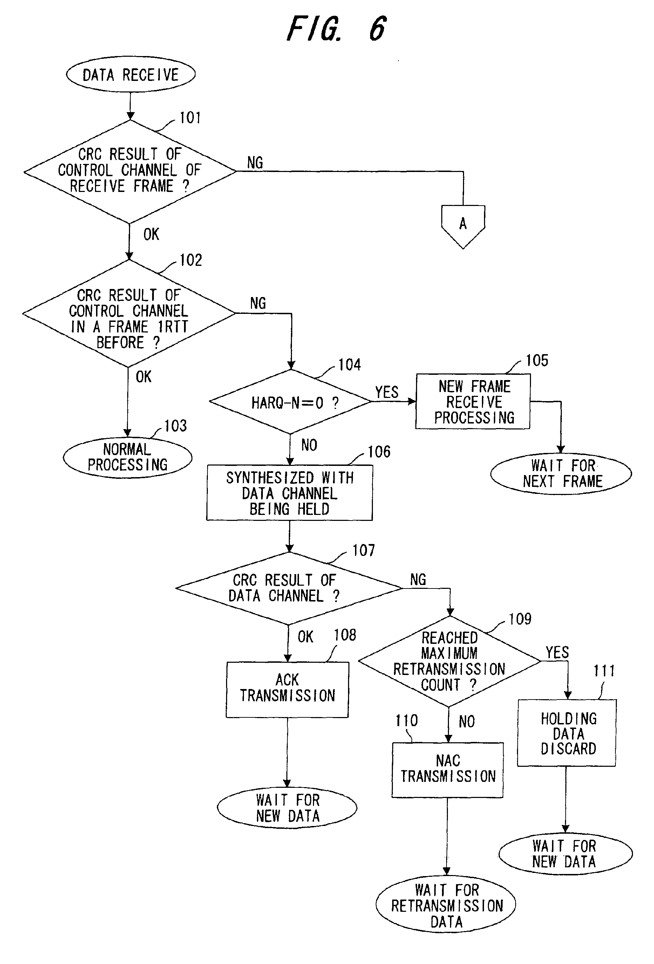

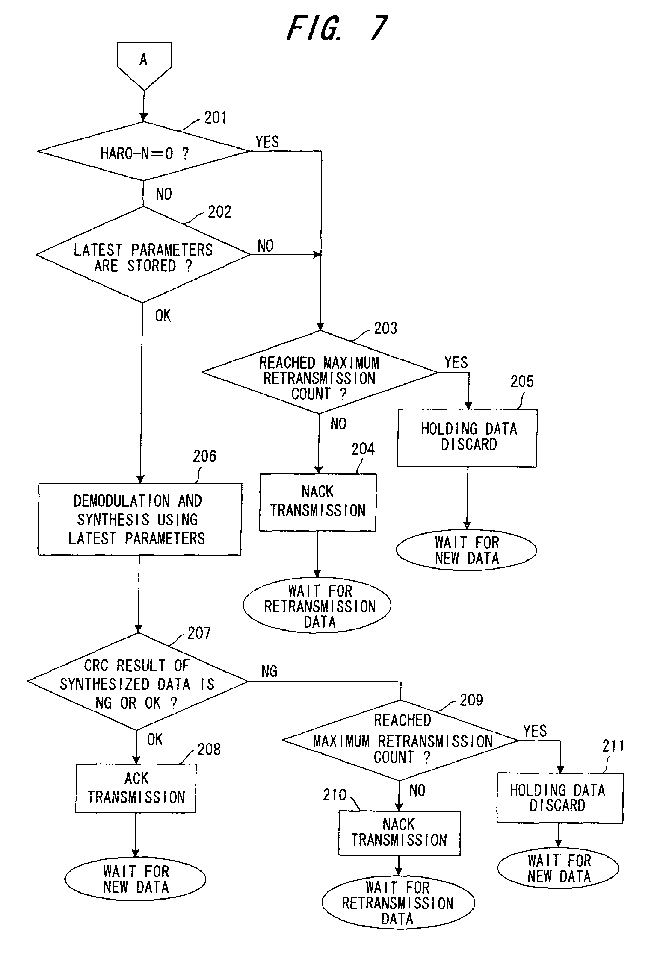

Fig. 6 and Fig. 7 are flow charts depicting the general processing of the receiver.

First it is checked whether the CRC result of the control channel of the receive frame is NG or OK (step 101), and if OK, the receiver checks the CRC result of the control channel in a frame 1RTT before (step 102), and if this is OK the receiver performs normal processing and waits for the next frame (step 103). In other words, retransmission synthesis processing that is the same as previously considered is performed.

If the CRC result of the control channel in a frame 1RTT before is NG in step 102, it is checked whether the retransmission count HARQ-N = 0 (step 104), and if the retransmission count is 0, the receiver performs receive processing of the new frame regarding the receive frame as a new frame (step 105), and waits for the next frame.

If the retransmission count HARQ-N is not 0, the receive frame is a retransmission frame, so the receiver synthesizes the receive frame with the data channel held in the data channel holding memory 5 or the synthesized data in the retransmission synthesis buffer 11(step 106), checks whether the CRC result on the synchronized data is OK or NG (step 107), and if OK, the receiver outputs the synthesized data and sends ACK to the transmitter (step 108), and waits for a new frame.

If the CRC result is NG in step 107, it is checked whether the retransmission count HARQ-N is the same as the maximum retransmission count (step 109), and if the retransmission count is less than the maximum retransmission count, the receiver sends NACK (step 110) and waists for a retransmission frame. If the retransmission count is the same as the maximum retransmission count, the receiver discards the holding data (step 111) and waits for a new frame.

If the CRC result of the control channel of the receive frame is NG in step 101, on the other hand, it is checked whether the retransmission count HARQ-N = 0 (step 201), and if the retransmission count is 0, the receive frame is a new frame, so the receiver sends NACK (step 204) and waits for a retransmission frame.

If the retransmission count HARQ-N is not 0, it is checked whether the CRC of the control channels of the new and retransmission frames have ever become OK, in other words, whether the latest parameters have been stored in the parameter storage unit 6 (step 202). If the latest parameters are not stored, it is checked whether the retransmission count HARQ-N is the same as the maximum retransmission count (step 203), and if the retransmission count is less than the maximum retransmission count, the receiver sends NACK (step 204) and waits for a retransmission frame. If the retransmission count is the same as the maximum retransmission count, the receiver discards the holding data (step 205) and waits for a new frame. Step 205 is the case when the CRC result of the control channel became NG in all the frames, as shown in (5) of Fig. 2.

If the latest parameters have been stored in step 202, the receiver demodulates the data channel stored in the data channel holding memory 5 using the latest parameters, synthesizes this demodulated data channel and the data held in the retransmission synthesis buffer 11 (step 206), and checks whether the CRC result on the synthesized data is OK or NG (step 207), and if OK, the receiver outputs the synthesized data and sends ACK to the transmitter (step 208) and waits for a new frame.

If the CRC result on the synthesized data is NG in step 207, it is checked whether the retransmission count HARQ-N is the same as the maximum retransmission count (step 209), and if the transmission count is less than the maximum retransmission count, the receiver sends NACK (step 210), and waits for a retransmission frame. If the retransmission count is the same as the maximum retransmission count, the receiver discards the holding data (step 211) and waits for a new frame.

### (D) Variant form

The above is the case when the parameters acquired by demodulating the control channel are stored in the parameter storage unit 6 as the latest parameters and used every time the CRC result of a control channel of a new frame and a retransmission frame received at each 1RTT becomes OK.

However if the parameters of all the frames are the same in the period from the receipt of a new frame to the receipt of a retransmission frame with the maximum retransmission count, then the parameters acquired by demodulating the control channel can be stored in the parameter storage unit 6 and used each time the CRC result of the control channel of the received frame becomes OK. In this case, it is unnecessary to store the parameters as a set with SFN in the parameter storage unit 6, as shown in (A) of Fig. 4, but one or both of the latest parameter NPR and the current parameter CPR can be stored, as shown in (B) of Fig. 4.

The following is possible as embodiments of this variant form.
- Embodiment 1 of variant form
   It is monitored whether the control channel of the receive frame has an error, regardless a new frame or retransmission frame, and if there is an error, the data is demodulated using the parameters of a normal control channel of a frame received before this receive frame, and decoding processing is executed based on this demodulation result.
- Embodiment 2 of variant form
   It is monitored whether the control channel of the retransmission frame has an error, and if there is an error, the data channel of the retransmission frame is demodulated using the parameters of a normal control channel of a frame received before this retransmission frame, this demodulation result and the data of the received frame are synthesized, and decoding processing is performed based on the synthesized data.
   As many apparently widely different embodiments of the present invention can be made without departing from the spirit and scope thereof, it is to be understood that the invention is not limited to the specific embodiments thereof except as defined in the appended claims.

## Claims

1. A receive method for receiving information necessary for receive processing of a data channel via a corresponding control channel and executing the receive processing of said data channel based on the information received via said control channel, comprising the steps of:
storing signals received via said data channel if the information received via said corresponding control channel has an error; and
acquiring first receive data by executing the receive processing of said stored receive signals based on the information received via a retransmission control channel transmitted in a subsequent retransmission processing step.

2. The receive method according to Claim 1, further comprising a step of:
acquiring second receive data by executing the receive processing of a retransmission data channel corresponding to said retransmission control channel based on the information received via this retransmission control channel; and
synthesizing said first receive data and said second receive data, and decoding the synthesized data.

3. A receive method for receiving information necessary for receive processing of a data channel via a corresponding control channel and executing the receive processing of said data channel based on the information received via said control channel, comprising the steps of:
storing receive signals at least either on a control channel through which the information is transmitted in a new transmission processing step or on a control channel through which the information is transmitted in a retransmission processing step where no error is detected in the received information; and
acquiring first receive data by executing receive processing for the data channel which is transmitted in a subsequent retransmission processing based on said stored receive signals.

4. The receive method according to Claim 3, further comprising a step of:
acquiring second receive data by executing the receive processing for a data channel corresponding to said control channel where no error is detected in the received information; and
synthesizing said first receive data and said second receive data, and decoding the synthesized data.

5. A receive method for receiving information necessary for receive processing of a data channel via a corresponding control channel and executing the receive processing of said data channel based on the information received via said control channel, comprising the steps of:
storing receive signals on a control channel where no error is detected in the received information; and
executing receive processing based on said stored receive signals, for a data channel which is transmitted either at the next transmission timing of the data channel corresponding to said control channel or at a retransmission timing.

6. The receive method according to Claim 5, wherein said receive processing is executed under the condition that the receive information of the control channel received at the next transmission timing of said control channel or at a retransmission timing has an error.

7. A receive method for receiving information necessary for receive processing of a data channel via a corresponding control channel and executing the receive processing of said data channel based on the information received via said control channel, comprising the steps of:
holding a plurality of receive blocks received via said data channel;
acquiring retransmission count information (N) included in a normal control channel where no error is detected;
synthesizing the receive blocks of N or less being held and the receive block of the data channel corresponding to said normal control channel after performing receive processing thereon using the information received via said normal control channel; and
decoding the data after synthesis.

8. A receiver for receiving information necessary for receive processing of a data channel via a corresponding control channel and executing the receive processing of said data channel based on the information received via said control channel, comprising:
a holding unit for storing signals received via said data channel when information received via said corresponding control channel has an error; and
a demodulation unit for acquiring first receive data by executing receive processing for said stored receive signals based on the information received via a retransmission control channel transmitted in a subsequent retransmission processing step.

9. The receiver according to Claim 8, further comprising:
a decoding unit for acquiring second receive data by executing the receive processing of a retransmission data channel corresponding to said retransmission control channel based on the information received via this retransmission control channel, synthesizing the first receive data and second receive data, and decoding the synthesized data.

10. A receiver for receiving information necessary for receive processing of a data channel via a corresponding control channel and executing the receive processing of said data channel based on the information received via said control channel, comprising:
a holding unit for storing receive signals at least either on a control channel through which the information is transmitted in a new transmission processing step or on a control channel through which the information is transmitted in a retransmission processing step where no error is detected in the received information; and
a demodulation unit for acquiring first receive data by executing receive processing for the data channel which is transmitted in a subsequent retransmission processing, based on said stored receive signals.

11. The receiver according to Claim 10, further comprising:
a decoding unit for acquiring second receive data by executing receive processing for a data channel corresponding to said control channel where no error is detected in the received information, synthesizing said first receive data and said second receive data, and decoding the synthesized data.

12. A receiver for receiving information necessary for receive processing of a data channel via a corresponding control channel and executing the receive processing of said data channel based on the information received via said control channel, comprising:
a holding unit for storing receive signals on a control channel where no error is detected in the received information; and
a demodulating unit for executing receive processing based on said stored receive signals, for a data channel which is transmitted either at the next transmission timing of the data channel corresponding to the control channel or at a retransmission timing.

13. The receiver according to Claim 12, wherein said receive processing is executed under the condition that the receive information of the control channel received at the next transmission timing of said control channel or at a retransmission timing has an error.

14. A receiver for receiving information necessary for receive processing of a data channel via a corresponding control channel and executing the receive processing of said data channel based on the information received via said control channel, comprising:
a holding unit for holding a plurality of receive blocks received via said data channel;
a synthesize unit for acquiring retransmission count information (N) included in a normal control channel where no error is detected, and synthesizing the receive blocks of N or less being held and the receive block of the data channel corresponding to said normal control channel after performing receive processing thereon using the information received via said normal control channel; and
a decoding unit for decoding data after synthesis.
